# EUROPEAN PATENT APPLICATION

(11) **EP 1 950 086 A2**
(43) Date of publication of application: **30.07.2008**
(21) Application number: 07150249.6
(22) Date of filing: 20.12.2007
(51) Int. Cl.: B60N 2/64, B60N 2/68

(54) **Motor-vehicle seat with backrest frame constituted by a monolithic structure made of magnesium alloy**

(30) Priority: 23.01.2007 IT TO20070043
(71) Applicant: Lear Corporation Italia S.r.l., 10121 Torino (IT)
(72) Inventor: Cartosio, Alberto, 10095, Grugliasco (Torino) (IT); Giraudo, Elena, 10095, Grugliasco (Torino) (IT)
(74) Representative: Notaro, Giancarlo

(57) **Abstract**

Described herein is a motor-vehicle seat with backrest frame (1) constituted by a monolithic structure made of magnesium alloy, obtained by injection moulding, without use of metal reinforcement inserts.

## Description

The present invention relates to motor-vehicle seats of the type comprising a backrest frame constituted by a structure made of magnesium alloy.

A seat of this type is, for example, described and illustrated in the patent document No. US 6 076 888, filed in the name of the present applicant.

Seats of the above type are particularly indicated for being used, for example, on high-performance motor vehicles, on account of their characteristics of extreme lightness. In the known embodiments, however, the magnesium-alloy structure must be reinforced with metal inserts, which are provided in the die with which the structure is made, in order to guarantee the necessary characteristics of resistance and stiffness in the areas that function as support for parts or accessories of the seat. This results in an increase in weight and in a greater complication of the structure of the production die and of the moulding process itself.

The purpose of the invention is to overcome said drawbacks.

Underlying the invention is the realization of the fact that in the process of moulding of the magnesium alloy, particularly in a process of injection moulding, the differences in the cooling times of the magnesium alloy in the die cause the walls of the structure obtained to present a sort of sandwich configuration, with a "core" having lower mechanical characteristics (on account of the tendency of bubbles and moulding impurities to accumulate therein) and two outer "skins" on the opposite faces of the core, of a composition that is purer than that of the core.

Starting from the above realization, the applicant has surprisingly found that it is possible to design a monolithic structure made of magnesium alloy with local sections shaped in such a way as to exploit in an optimal way the aforesaid structure in the form of sandwich and thus finally obtain the result of guaranteeing the necessary mechanical characteristics in all the portions of the frame of the backrest, without the need to provide metal reinforcement inserts and hence with the consequent advantages in terms of simplification of the die and simplification of the moulding process.

According to the invention, the seat consequently comprises a backrest frame constituted by a monolithic structure made of magnesium alloy obtained by injection moulding, without use of reinforcement inserts, said structure including two lateral uprights joined at the ends by a top cross member and a bottom cross member, said uprights and said cross members having a substantially C-shaped cross section, with the concavity facing backwards, in which said uprights and/or said top cross member and/or said bottom cross member have portions including stiffening ribbings, moulded integrally on the rear side of the frame, and in which said frame has a plurality of holes and/or seats for connection or anchorage of parts or accessories of the seat, at least part of said holes being made in portions of the wall of the magnesium-alloy structure that are cup-shaped or of enlarged thickness and are sized and shaped so as to ensure the characteristics of stiffness required, without any need for metal reinforcement inserts.

The C-shaped conformation of the cross section of the elements of the magnesium-alloy frame, together with the stiffening ribbings, enables optimization in the distribution of the state of stress and of the weight of the structure. As has already been said, the exclusion of any type of co-moulded metal insert renders the structure lighter and the process of fabrication simpler.

In a preferred embodiment, some of the holes and/or seats made in the frame are used for engagement of screws or rivets for anchorage of a rear panel for covering the frame. Other holes are used for anchorage of an auxiliary frame extending substantially in the general plane of the backrest and within the central opening defined by the elements of the frame, to which a stuffing module of the backrest is anchored.

As indicated above, further holes and/or seats of the magnesium-alloy frame are used for anchorage or connection of other parts or accessories of the backrest, once again by means of screws or rivets. There are thus provided holes for connection of the device for adjustment of the inclination of the backrest, holes for connection of a lever device for sending the backrest down forwards, holes for connection of lateral air-bag modules, as well as holes for mounting an electrical actuator for adjustment of the backrest and an electro-pneumatic actuator for adjustment of the conformation of the stuffing of the backrest. In the preferred embodiment, said actuators are housed within the cavity defined by the C-shaped cross section of the elements of the magnesium-alloy frame, in an area corresponding to the bottom-end portions of the two lateral uprights of the frame.

Further characteristics and advantages of the invention will emerge from the ensuing description with reference to the annexed drawings, which are provided purely by way of non-limiting example and in which:
Figure 1 is a perspective view of a preferred embodiment of the frame made of magnesium alloy of the seat according to the invention;

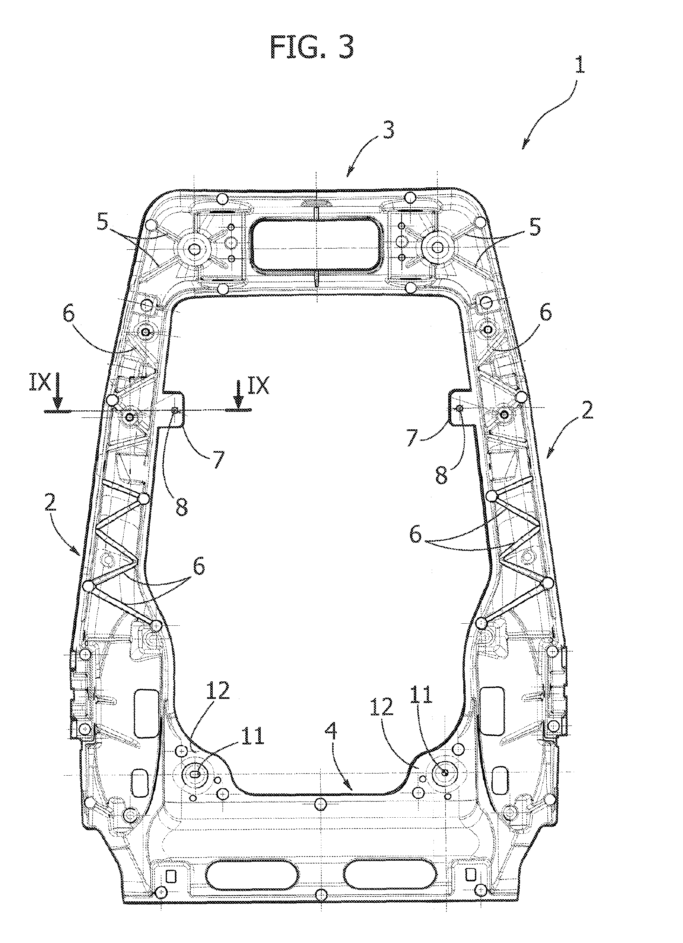

Figures 2-5 illustrate a front view, a rear view, a side view, and a top view of the frame of Figure 1;
Figures 6-8 are cross-sectional views, at an enlarged scale, according to the lines VI-VI, VII-VII and VIII-VIII of Figure 2;
Figure 9 is a cross-sectional view at an enlarged scale according to the line IX-IX of Figure 3;
Figure 11 is a cross-sectional view according to the line XI-XI of Figure 2; and
Figure 12 is a cross-sectional view and at an enlarged scale according to the line XII-XII of Figure 4;
Figure 13 is a schematic and exploded perspective view of the seat according to the invention; and
Figures 14, 15 illustrate in perspective view two further details of the seat according to the invention.

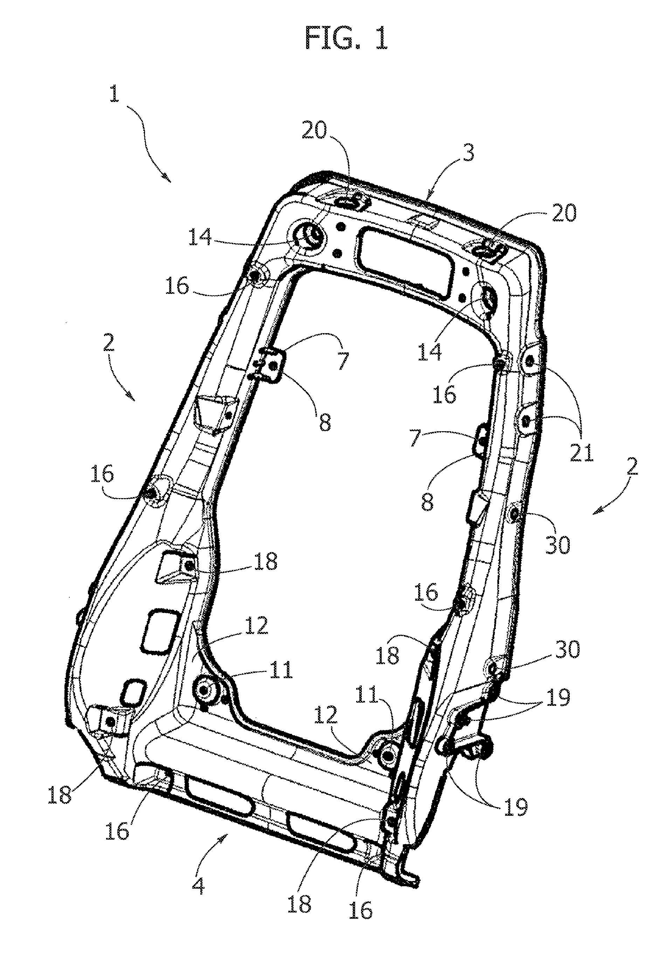

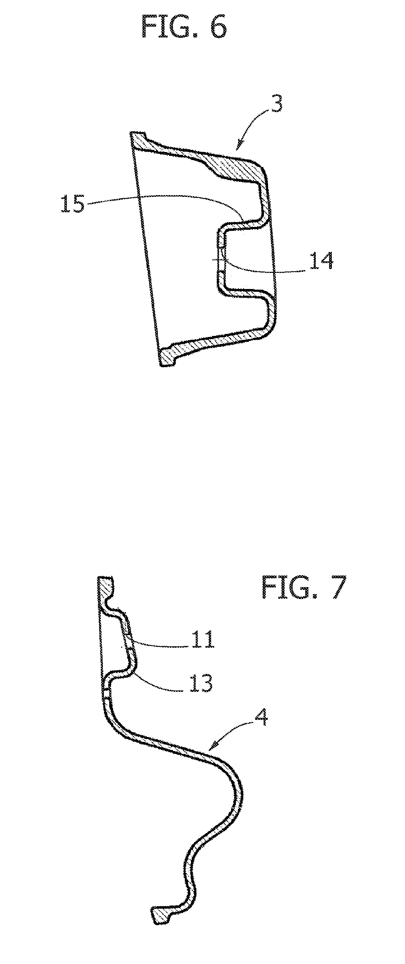

In Figure 1, the reference number 1 designates as a whole a backrest frame of a motor-vehicle seat constituted by a monolithic structure made of magnesium alloy obtained by injection moulding, without use of metal reinforcement inserts. The structure 1 comprises two lateral uprights 2 joined at their ends by a top cross member 3 and a bottom cross member 4. The uprights 2 and the cross members 3, 4 have a substantially C-shaped cross section (see also Figures 6, 7, 9) with the concavity facing backwards.

The uprights 2 and the top cross member 3 have moreover stiffening ribbings 5, made integrally by moulding, on the rear side of the frame 1.

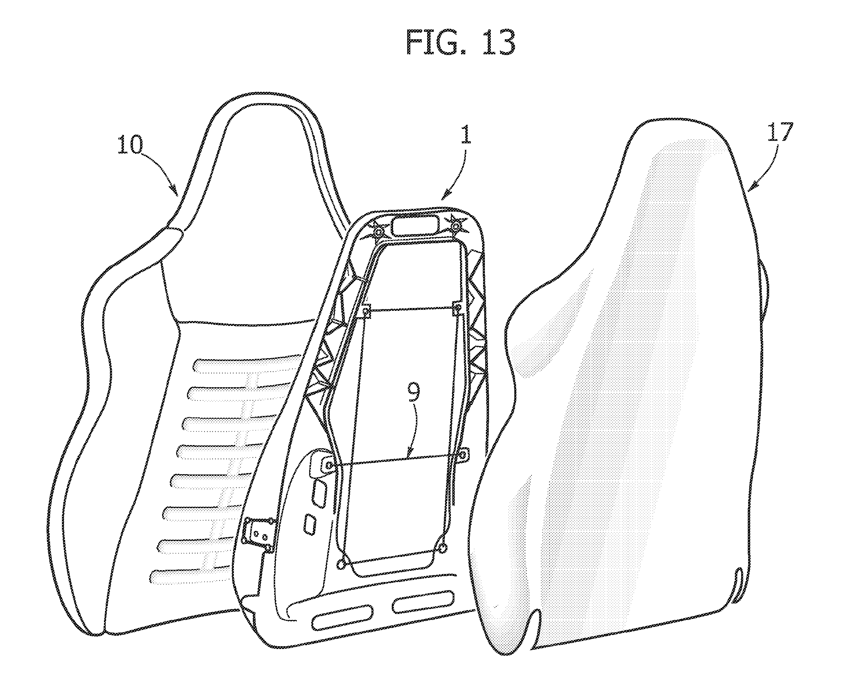

Likewise made integrally with the uprights 2 are two tabs 7, projecting in the internal opening of the frame 1, in which holes are made 8 for anchorage of an auxiliary frame 9 (visible in Figure 13), to which a stuffing module 10 (see once again Figure 13) of the backrest is to be anchored. The stuffing module can also be constituted by a central cushion distinct from the rest of the backrest stuffing. The auxiliary frame 9 is moreover anchored by engagement of connection means, such as screws or rivets, to two holes 11 made in two gussetlike portions 12 extending in regions corresponding to the two bottom vertices of the central opening of the frame. As may be seen in Figure 13, the auxiliary frame 9 extends substantially in the general plane of the frame 1 and occupies the central opening of the frame.

Once again with reference to the holes 11, Figure 7 shows, how said holes are made each in a cup-shaped portion 13, which is configured and sized in such a way as to guarantee the necessary characteristics of resistance at the points of anchorage of the auxiliary frame 9, without the need for metal reinforcement inserts. The same applies to two holes 14 (see Figures 1 and 6) made in the top cross member 3 and designed for engagement of screws for mounting a lever device for sending the backrest of the seat down forwards. Also in this case, the hole 14 is made at a cup-shaped portion 15 (see Figure 6) in such a way as to obtain the desired mechanical characteristics without the need for metal reinforcement inserts.

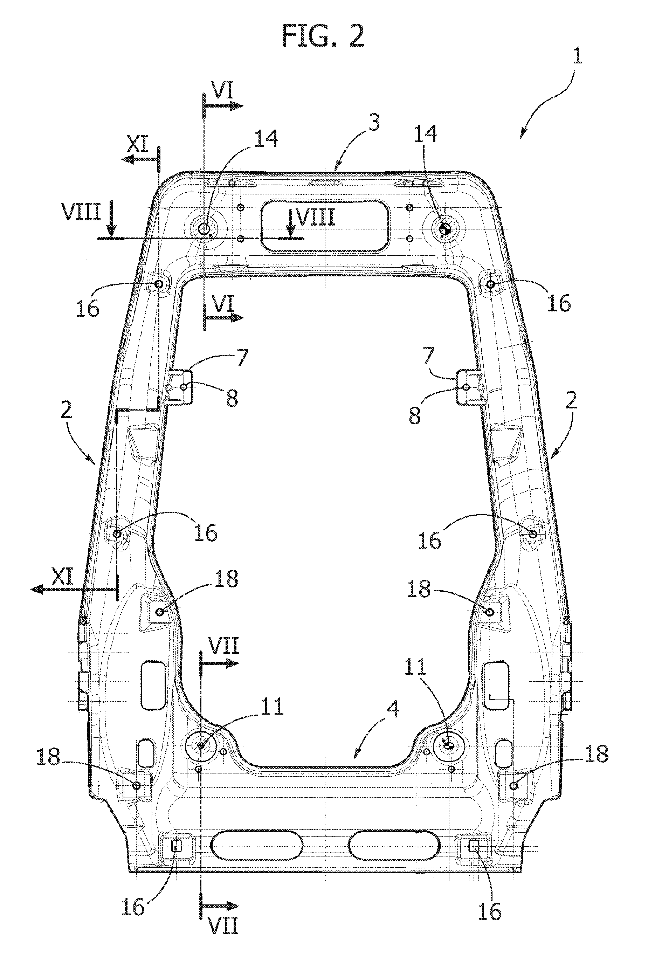

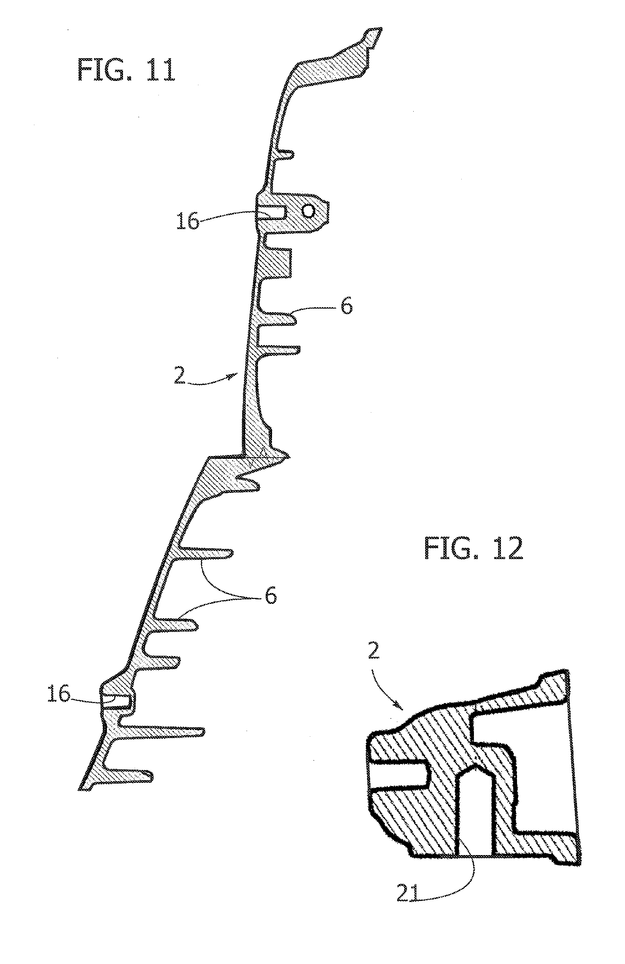

Also made in the two lateral uprights 2 are blind holes 16 (see Figures 1, 2, 11) for engagement of a rear panel 17 (Figure 13) made, for example, of plastic material, for covering the frame of the backrest.

Moreover made in the bottom areas of the two lateral uprights 2 are seats with holes 18 for mounting inflatable sacs for adjusting the configuration of the stuffing of the backrest.

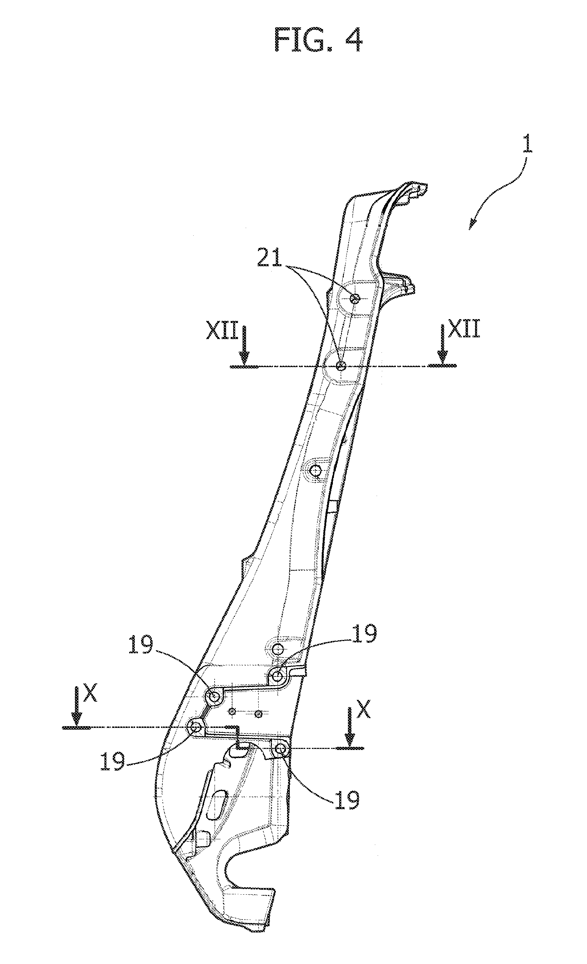

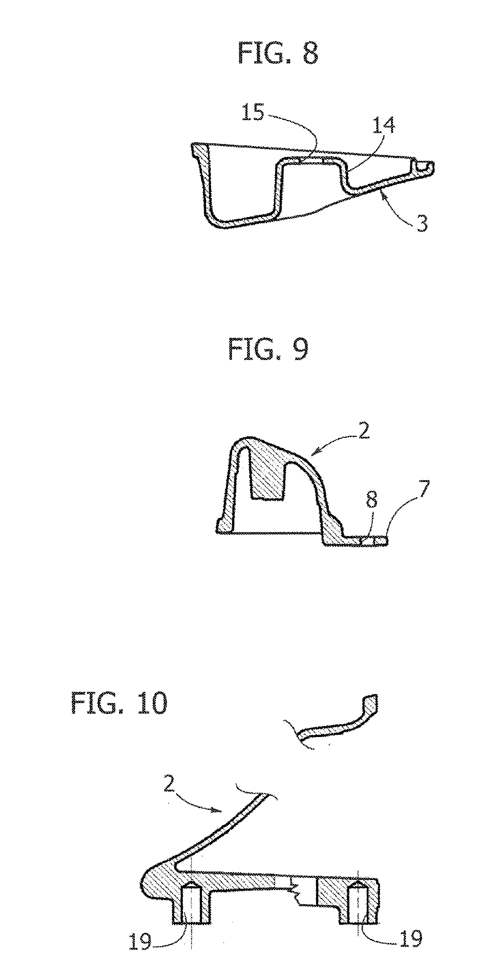

In the bottom areas of the lateral uprights, on the outside thereof, moreover provided are portions of increased thickness with blind holes 19 (see Figures 4 and 10), which are to receive self-tapping screws for mounting a device for adjustment of the inclination of the backrest.

The holes not aligned in the direction of the moulding axis (such as, for example, the holes designated by the numbers 19, 30, 21) are obtained by machining in order not to complicate the production of the die.

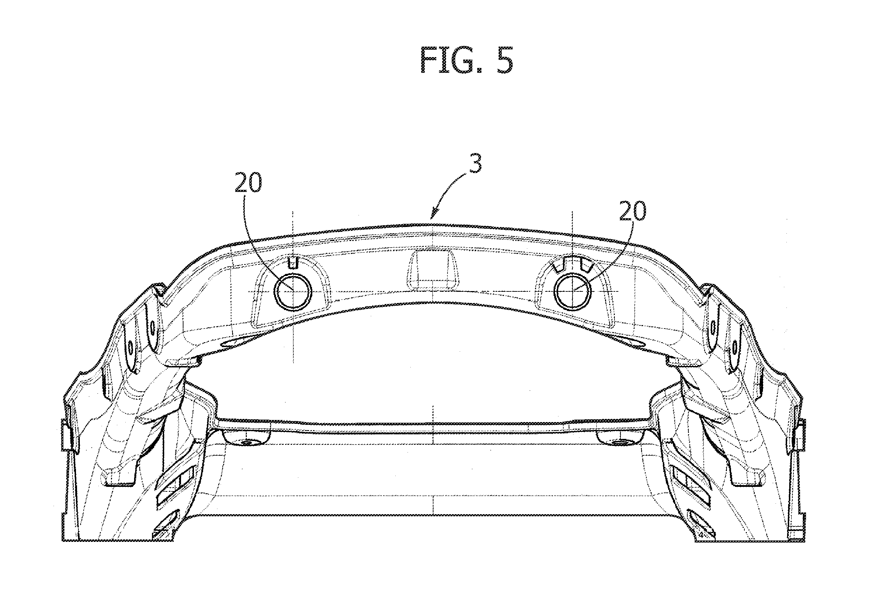

With reference to Figure 5, the top cross member 3 moreover has drawn areas with holes 20 for the passage of the rods for supporting the headrest. In the top portions of the two lateral uprights 2, on the outside thereof, holes 21 are moreover made (see Figures 1, 4, 12) for mounting a possible integrated-headrest structure.

In addition, the lateral uprights 2 have, on their outer sides, holes 30 for anchorage of lateral air-bag modules.

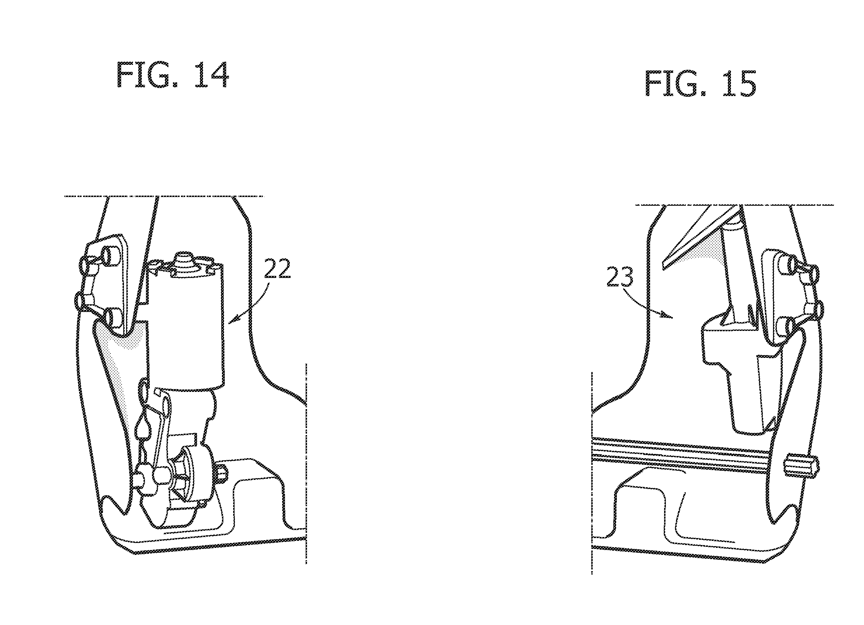

Figures 14 and 15 show how the bottom areas of the lateral uprights 2 can be exploited also for housing, in an area corresponding to the cavities defined by the C-shaped cross section of the uprights, a motor-reducer device 22, for electrical actuation of the adjustment of the inclination of the backrest, and an electro-pneumatic device 23, for supply of compressed air to inflatable sacs for adjustment of the configuration of the stuffing of the backrest.

As emerges clearly from what has been set forth above, the seat according to the invention is characterized in that it comprises a backrest frame constituted by a monolithic structure made of magnesium alloy obtained by injection moulding without use of metal reinforcements. As likewise already mentioned, said result is obtained thanks to the configuration described above, with the C-shaped cross section and the stiffening ribbings, sized in such a way as to exploit the characteristics of the material in an optimal way and above all taking into account the fact that each portion of wall made of magnesium alloy obtained by moulding has a configuration and a behaviour substantially similar to that of a sandwich structure, with the characteristics that have been described above.

Of course, without prejudice to the principle of the invention, the details of construction and the embodiments may vary widely with respect to what is described and illustrated herein purely by way of example, without thereby departing from the scope of the present invention.

## Claims

1. A motor-vehicle seat with backrest frame (1) constituted by a monolithic structure made of magnesium alloy obtained by injection moulding without use of metal reinforcement inserts, comprising two lateral uprights (2), joined at their end by a top cross member (3) and a bottom cross member (4), said uprights (2) and said cross members (3, 4) having a substantially C-shaped cross section, with the concavity facing backwards, in which said uprights (2) and/or said top cross member (3) and/or said bottom cross member (4) have portions including stiffening ribbings (6), made integrally by moulding on the rear side of the frame (1), and in which said frame (1) has a plurality of holes and/or seats for connection and anchorage of parts or accessories of the seat, at least part of said holes and/or seats being made in portions of the wall of the magnesium-alloy structure that are cup-shaped (13, 15) or of enlarged thickness and are sized and shaped in such a way as to ensure the mechanical characteristics of stiffness required without the need for metal reinforcement inserts.

2. The seat according to Claim 1, **characterized in that** some of said holes and/or seats (8, 11) are used for the connection of an auxiliary frame (9) extending substantially in the general plane of the backrest frame (1) within the central opening defined by the frame (1), said auxiliary frame (9) being used for supporting in turn a stuffing module of the backrest.

3. The seat according to Claim 1, **characterized in that** some of said holes and/or seats (16) are used for connection of a covering rear panel (17) of the backrest frame (1).

4. The seat according to Claim 2, **characterized in that** two of said holes (11) having the purpose of connecting the auxiliary frame (9) are made in two gussetlike portions (12) of the frame (1), extending in an area corresponding to the bottom vertices of the central opening of the frame, said holes (11) being made in particular in a region corresponding to cup-shaped portions (13) of the wall of said gussets (12).

5. The seat according to Claim 1, **characterized in that** the wall of the top cross member (3) has cup-shaped portions (15), in which holes (14) are made for anchorage of a lever device for sending the backrest down forwards.

6. The seat according to Claim 1, **characterized in that** the lateral uprights (2) of the backrest frame (1) are provided with holes (19) in thickened areas of the wall of the frame for anchorage of a device for adjustment of the inclination of the backrest.

7. The seat according to Claim 1, **characterized in that** the lateral uprights (2) have on their sides external holes (30) for anchorage of air-bag modules of the backrest.

8. The seat according to Claim 1, **characterized in that** the lateral uprights (2) of the frame (1) have, on their outer sides, in areas corresponding to their top portions, holes (21) for anchorage of a possible integrated headrest structure.

9. The seat according to Claim 1, **characterized in that** the backrest frame (1) has holes (18) for anchorage of modules with inflatable sacs for adjustment of the configuration of the stuffing of the backrest.

10. The seat according to Claim 1, **characterized in that** it is provided for anchorage and housing of an electrical actuator for adjustment of the inclination of the backrest in the bottom area of one of the lateral uprights (in a region corresponding to the cavity defined by the C-shaped cross section).

11. The seat according to Claim 1, **characterized in that** said frame is provided for housing and mounting an electro-mechanical actuator in a region corresponding to the bottom area of one of the lateral uprights (2), in the cavity defined by the C-shaped cross section, for supply of compressed air to inflatable sacs for adjustment of the configuration of the stuffing of the backrest.
